Europäisches Patentamt

European Patent Office

Office européen des brevets

(19)

(11) Numéro de publication : **0 013 193**
**B1**

# (12) FASCICULE DE BREVET EUROPÉEN

(45) Date de publication du fascicule du brevet :
17.03.82

(21) Numéro de dépôt : **79400848.2**

(22) Date de dépôt : **12.11.79**

(51) Int. Cl.³ : **F 16 D 23/12**, F 16 C 32/02

(54) **Commande mécanique d'embrayage.**

(30) Priorité : **28.12.78 FR 7836660**

(43) Date de publication de la demande :
**09.07.80 (Bulletin 80/14)**

(45) Mention de la délivrance du brevet :
**17.03.82 Bulletin 82/11**

(84) Etats contractants désignés :
**DE GB IT**

(56) Documents cités :
**CH - A - 264 401**
**FR - A - 1 457 302**
**FR - A - 1 508 415**
**FR - A - 1 150 560**
**FR - A - 2 279 076**

(73) Titulaire : **SOCIETE ANONYME AUTOMOBILES CITROEN**
**117 à 167, Quai André Citroen**
**F-75747 Paris Cedex 15 (FR)**

**AUTOMOBILES PEUGEOT**
**75, avenue de la Grande Armée**
**F-75116 Paris (FR)**

(72) Inventeur : **Redempt, Jacques Edouard**
**5, rue des Ajoux**
**F-92400 Courbevoie (FR)**

(74) Mandataire : **Masseron, Georges**
**CENTRE TECHNIQUE CITROEN Chemin Vicinal No 2**
**F-78140 Velizy-Villacoublay (FR)**

EP 0 013 193 B1

Imprimerie Jouve, 18, rue St-Denis, 75001 Paris, France

Commande mécanique d'embrayage

La présente invention concerne une commande mécanique d'embrayage notamment pour véhicule automobile, et plus particulièrement l'articulation d'une fourchette de débrayage.

L'invention s'applique à un embrayage du type comprenant un disque de friction solidaire d'un arbre mené, monté rotatif dans un carter et de part et d'autre duquel sont disposés des plateaux solidaires en rotation d'un arbre menant et maintenus en contact avec le disque de friction par l'intermédiaire d'un organe élastique, tel qu'un diaphragme sensiblement conique. Une butée de débrayage coopère avec ce diaphragme en vue du débrayage sous l'action d'un organe, généralement réalisé sous forme d'une fourchette montée pivotante dans le carter d'embrayage et reliée par l'intermédiaire d'un transmetteur d'effort, tel qu'un câble, à une pédale ou un levier actionné par le conducteur.

Il est connu (FR-A 1,150.560) de réaliser des fourchettes comprenant un premier levier solidaire par une de ses extrémités du câble susdit et par son autre extrémité d'un axe monté pivotant dans le carter d'embrayage et portant deux autres leviers susceptibles de coopérer avec la butée de débrayage.

Habituellement, de tels embrayages sont exposés aux projections, aux poussières et à l'humidité, ce qui provoque au niveau de l'axe un encrassement et par suite des frottements nécessitant lors d'un débrayage, d'exercer sur la pédale ou le levier de débrayage un effort relativement important.

Généralement, l'axe de la fourchette est monté dans deux paliers à faible coefficient de frottement, tels que des bagues anti-friction en métal tendre ou en matière plastique, mais cette solution se révèle parfois insuffisante.

L'invention entend remédier à cet inconvénient par l'utilisation d'une fourchette dont l'axe est monté pivotant dans le carter sur deux articulations à couteau.

Elle a donc pour objet une articulation de fourchette d'un embrayage tel que défini ci-dessus, ladite fourchette étant composée d'un premier levier relié à une de ses extrémités par l'intermédiaire d'un transmetteur d'effort à une pédale ou un levier actionné par le conducteur et à son autre extrémité à un axe monté pivotant dans le carter et portant au moins un autre levier coopérant avec la butée susdite, l'axe étant monté pivotant dans le carter par l'intermédiaire de deux articulations à couteau, les couteaux étant orientés suivant la direction des forces qui s'exercent respectivement au niveau des articulations et qui résultent d'une part de la force exercée par le transmetteur d'effort sur le premier levier et d'autre part de la force exercée par la butée de débrayage sur ledit autre levier.

Selon l'invention, chaque couteau susdit est réalisé à une extrémité de l'axe et coopère par une arête avec une zone d'appui d'un palier monté dans le carter, l'arête du couteau et la zone d'appui du palier correspondant étant confondues avec l'axe de pivotement de la fourchette.

Selon un mode de réalisation, une goupille est emmanchée dans au moins un des paliers et est disposée dans une ouverture du carter.

Selon un autre mode de réalisation, une bague de positionnement est interposée entre au moins un des paliers susdits et le carter.

Dans ce cas, un dégagement est prévu à l'une des extrémités de la bague de positionnement et le palier porte un rebord propre à être disposé dans le dégagement de la bague de positionnement, et à assurer la solidarité angulaire entre celle-ci et le palier.

De préférence, la bague de positionnement est arrêtée d'une part axialement par un rebord réalisé à son autre extrémité et disposé entre le carter et une bague vissée sur l'axe susdit et d'autre part en rotation par un ergot réalisé sur le rebord susdit et engagé dans une rainure du carter.

On a décrit ci-après, à titre d'exemples non limitatifs, une articulation de fourchette de débrayage selon l'invention, avec référence au dessin annexé dans lequel :

la figure 1 est une coupe axiale d'un embrayage,

la figure 2 est une coupe suivant II-II de la figure 1,

la figure 3 est une vue schématique de la fourchette avec indications des efforts qui s'exercent au niveau des articulations,

la figure 4 est une coupe suivant IV-IV de la figure 2,

la figure 5 est une coupe suivant V-V de la figure 2,

la figure 6 est une vue en élévation de la bague de positionnement,

la figure 7 est une coupe suivant VII-VII de la figure 6,

la figure 8 est une vue en élévation du palier et la figure 9 est une coupe suivant IX-IX de la figure 8.

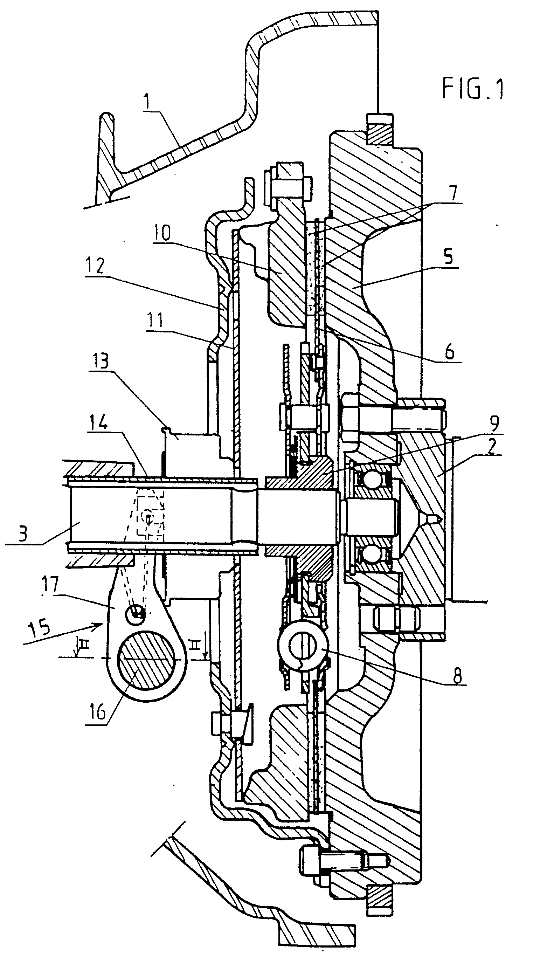

A la figure 1, on voit un embrayage comprenant un carter 1 et propre à accoupler un arbre moteur 2 et un arbre récepteur 3 dont l'extrémité est portée, par l'intermédiaire d'un roulement 4, par l'extrémité de l'arbre moteur 2.

L'embrayage comporte de manière usuelle un volant ou plateau de réaction 5 solidaire de l'arbre moteur 2, un disque de friction 6 de part et d'autre duquel sont disposées des garnitures de friction 7 et qui est relié par l'intermédiaire de ressorts d'amortissement 8 à un moyeu 9 coulissant sur l'arbre récepteur 3 et tournant avec lui, un plateau presseur 10 mobile axialement et solidaire en rotation du plateau de réaction 5, un diaphragme élastique 11 tendant à déplacer le plateau presseur 10 vers le plateau de réaction 5, de manière à serrer le disque de friction 6 entre les deux plateaux, et étant recouvert par un couvercle 12 fixé au plateau de réaction 5, et une butée de débrayage 13 coulissant sur un palier fixe 14 sous l'action d'une fourchette 15 et coopérant avec le diaphragme 11 en le déformant de manière à permettre l'écartement des deux plateaux 5 et 10.

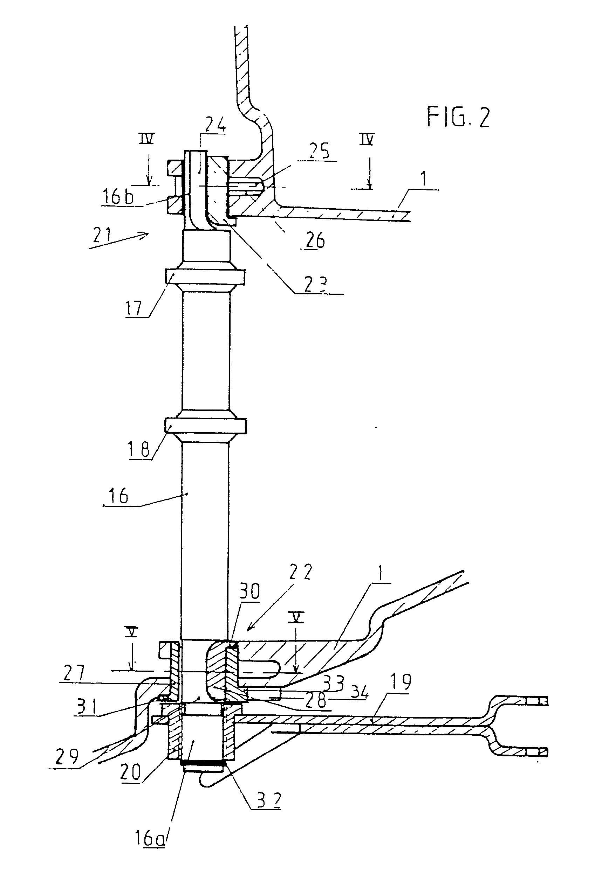

La fourchette 15 conforme à l'invention représentée à la figure 2 est composée d'un axe 16 monté pivotant dans le carter 1 et portant deux leviers 17 et 18 susceptibles d'agir sur la butée de débrayage 13, d'un levier 19 relié par une de ses extrémités à un cable non représenté solidaire de la pédale ou du levier actionné par le conducteur, et par son autre extrémité soudé sur une bague 20 solidaire en rotation, par l'intermédiaire de cannelures, de l'axe 16, et montée à l'extrémité 16a de ce dernier.

L'axe 16 est monté pivotant dans le carter 1 par l'intermédiaire de deux articulations à couteau 21 et 22.

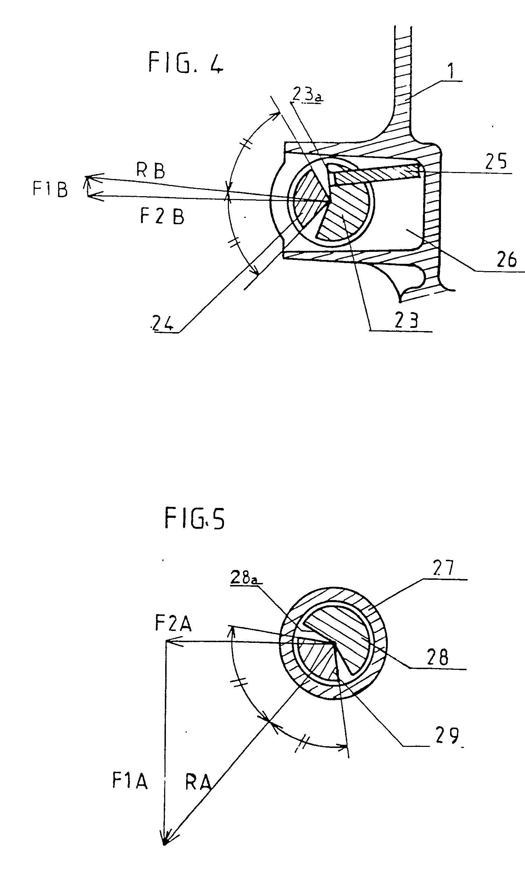

L'articulation 21 est composée d'un palier 23 coopérant avec un couteau 24 réalisé à l'extrémité 16b de l'axe 16. Le palier 23 est positionné au moyen d'une goupille 25 emmanchée dans le palier 23 et engagée dans une ouverture 26 du carter 1, comme visible à la figure 4.

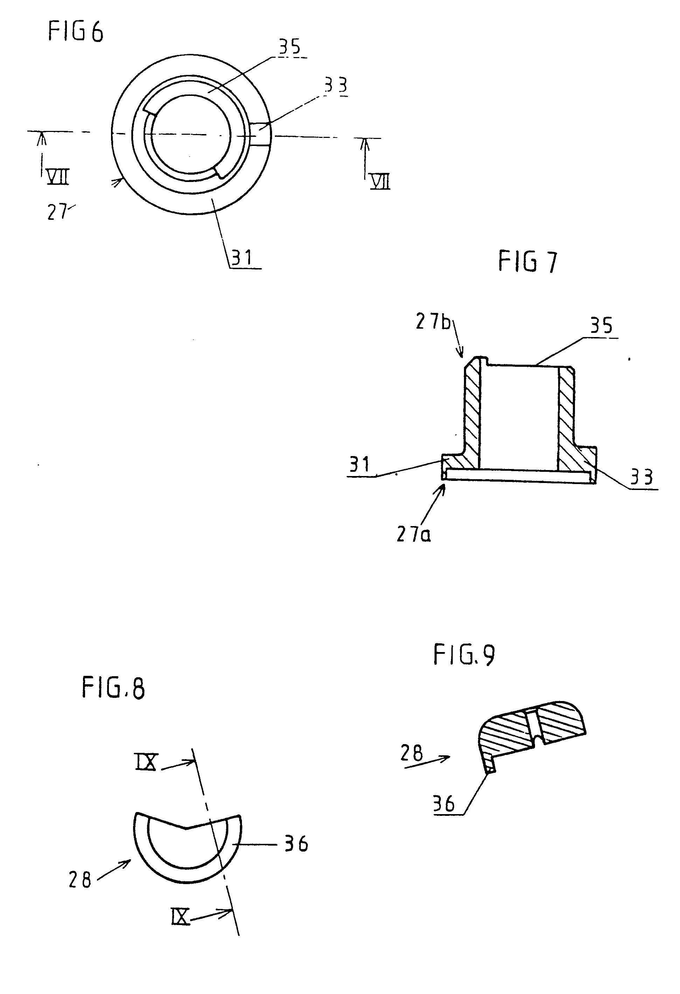

L'articulation 22 est composée d'une bague de positionnement 27, d'un palier 28 et d'un couteau 29 réalisé vers l'extrémité 16a de l'axe 16. La bague de positionnement, (représentée sur les figures 6 et 7), est montée dans l'alésage 30 du carter et est arrêtée d'une part en position axiale par un rebord 31 réalisé à une de ses extrémités 27a et disposé entre le carter 1 et la bague 20, elle-même arrêtée par un circlips 32, et d'autre part en rotation par l'intermédiaire d'un ergot 33 réalisé sur le rebord 31 et engagé dans une rainure 34 du carter 1.

A l'autre extrémité 27b de la bague de positionnement 27 est réalisé un dégagement 35. Le palier 28 (représenté sur les figures 8 et 9) présente un rebord 36 de forme analogue à celle du dégagement 35. En position montée, le rebord 36 s'engage dans le dégagement 35 de la bague 27 permettant ainsi le positionnement angulaire du palier 28.

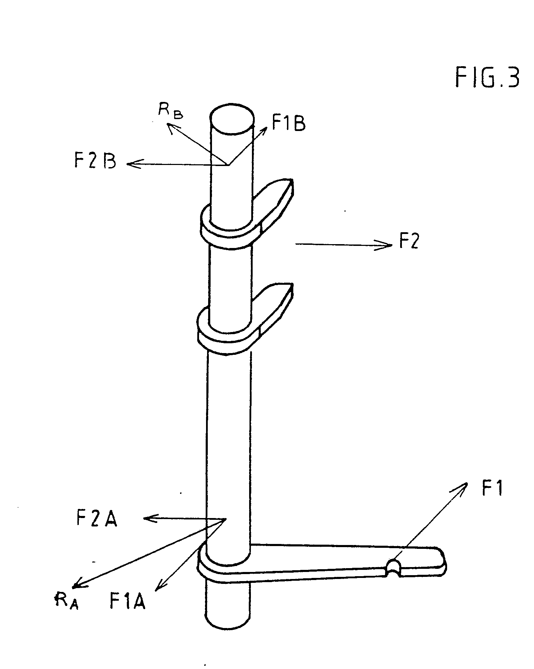

Les couteaux 24 et 29 de l'axe 16 ont leur arête confondue avec l'axe géométrique de pivotement de la fourchette et leur orientation est approximativement celle des forces $R_B$ et $R_A$ qui s'exercent respectivement au niveau des articulations 21 et 22 sur les couteaux 24 et 29, et qui résultent d'une part des forces de réaction $F1_B$ et $F1_A$ dues à la force F1 exercée par le câble sur le levier 19 et d'autre part des forces de réaction $F2_B$ et $F2_A$ dues à la force $F_2$ exercée par la butée de débrayage 13 sur les leviers 17 et 18 (figures 3, 4 et 5).

Chacun des paliers 23, 28 comporte une face d'appui 23a, 28a formant dièdre dont le sommet, confondu avec l'axe de pivotement de la fourchette, coopère avec l'arête du couteau correspondant, et leur orientation par les moyens 25, 26 et 33 à 36 susmentionnés est telle que le plan bissecteur de leur dièdre soit sensiblement confondu avec le plan de symétrie du couteau correspondant.

L'utilisation de telles articulations à couteau permet de diminuer les frottements et par suite l'effort à appliquer sur la pédale ou le levier de débrayage.

Il va de soi que la présente invention ne doit pas être considérée comme limitée aux modes de réalisation décrits, mais en couvre au contraire toutes les variantes.

**Revendications**

1. Articulation de fourchette de commande d'embrayage, notamment pour véhicules automobiles, la fourchette (15) étant disposée dans un carter (1), susceptible d'agir sur une butée de débrayage (13) coopérant avec un organe élastique (11) en vue de décoller des plateaux (5, 10) d'un disque (6) de part et d'autre duquel ils sont disposés, et composée d'un premier levier (19) relié à une de ses extrémités par un transmetteur d'effort à une pédale ou un levier actionné par le conducteur et à son autre extrémité à un axe (16) monté pivotant dans le carter (1) et portant au moins un autre levier (17, 18) coopérant avec la butée de débrayage susdite (13), caractérisée en ce que l'axe susdit (16) est monté pivotant dans le carter (1) par l'intermédiaire de deux articulations à couteau (21, 22), les couteaux (24, 29) étant orientés suivant la direction des forces s'exerçant respectivement au niveau des articulations et résultantes d'une part de la force exercée par le transmetteur d'effort sur le premier levier (19) et d'autre part de la force exercée par la butée de débrayage (13) sur ledit autre levier (17, 18).

2. Articulation de fourchette de commande d'embrayage selon la revendication 1, caractérisée en ce que chaque couteau susdit (24, 29) est réalisé à une extrémité de l'axe susdit (16) et coopère par une arête avec une zone d'appui d'un palier (23, 28) monté dans le carter (1), l'arête du couteau et la zone d'appui du palier correspondant étant confondues avec l'axe de pivotement de la fourchette (15).

3. Articulation de fourchette de commande d'embrayage selon la revendication 2, caractérisée en ce qu'une goupille (25) est emmanchée dans au moins un (23) des paliers susdits et est disposée dans une ouverture (26) du carter.

4. Articulation de fourchette de commande d'embrayage selon la revendication 2, caractérisée en ce qu'une bague de positionnement (27) est interposée entre au moins un (28) des paliers et le carter (1).

5. Articulation de fourchette de commande d'embrayage selon la revendication 4, caractérisée en ce qu'un dégagement (35) est prévu à une (27b) des extrémités de la bague de positionnement (27) et en ce que le palier correspondant (28) porte un rebord (36) propre à être disposé dans le dégagement (35) de la bague de positionnement (27) et à assurer la solidarisation angulaire entre celle-ci et le palier.

6. Articulation de fourchette de commande d'embrayage selon la revendication 4 ou 5, caractérisée en ce que la bague de positionnement (27) est arrêtée d'une part en position axiale au moyen d'un rebord (31) réalisé à son autre extrémité (27a) et disposé entre le carter (1) et une bague (20) solidaire de l'axe (16) et d'autre part en rotation par l'intermédiaire d'un ergot (33) réalisé sur le rebord susdit (31) et engagé dans une rainure (34) du carter (1).

### Claims

1. A linkage for clutch control forks, in particular for self-propelled vehicles, the fork (15) being situated in a housing (1) and being capable of acting on a cluth thrust bearing (13) cooperating with a resilient element (11) for the purpose of separating plates (5, 10) from a disc on either side of which the plates are disposed, and comprising a first lever (19) connected at one of its ends by a force transmitter to a pedal or lever operated by the driver, and at its other end to a spindle (16) which is pivotally mounted in the housing (1) and carries at least one other lever (17, 18) cooperating with the said clutch thrust bearing (13), characterised in that the said spindle (16) is pivotally mounted in the casing (1) by means of two knife-edge bearings (21, 22), the knife edges (24, 29) being aligned along the direction of the forces exerted at the level of each said bearing and resulting on the one hand from the force exercised by the force transmitter on the first lever (19) and on the other hand from the force exercised by the clutch thrust bearing (13) on the said other lever (17, 18).

2. A linkage for clutch forks according to claim 1, characterised in that each said knife-edge (24, 29) is formed at one end of the said spindle (16) and cooperates via an edge with a thrust area of a bearing (23, 28) mounted in the housing (1), the knife edge and the thrust area of the corresponding bearing coinciding with the pivoting axis of the fork (15).

3. A linkage for clutch control forks according to claim 2, characterised in that a cotter pin (25) is engaged in at least one (23) of the aforesaid bearings and is situated in an opening (26) of the housing.

4. A linkage for clutch control forks according to claim 2, characterised in that a locating ring (27) is positioned between at least one (28) of the bearings and the housing (1).

5. A linkage for clutch control forks according to claim 4, characterised in that a rebate (35) is situated at one (27b) of the extremities of the positioning ring (27) and in that the corresponding bearing (28) has a flange (36) adapted to be situated in the rebate (35) of the positioning ring (27) and to ensure angular interconnection between the latter and the bearing.

6. A linkage for clutch control forks according to claim 4 or 5, characterised in that on the one hand the axial position of the positioning ring (27) is determined by means of a flange (31) formed at its other extremity (27a) and situated between the housing (1) and a ring (20) integral with the spindle (16), and on the other hand the rotational position is determined by means of a catch (33) formed on the said flange (31) and engaged in a groove (34) of the housing (1).

### Ansprüche

1. Anlenkung einer Kupplungsbetätigungsgabel, insbesondere für Kraftfahrzeuge, wobei die Gabel (15) in einem Gehäuse (1) angeordnet ist, auf einen Auskuppelanschlag (13) einwirken kann, mit einem elastischen Element (11) zusammenarbeitet zum Lösen von Platten (5, 10) von einer Scheibe (6), auf deren beiden Seiten sie angeordnet sind, und aus einem ersten Hebel (19) besteht, der an einem seiner Enden über eine Kraftübertragung mit einem von Fahrer betätigten Pedal oder Hebel und an seinem anderen Ende mit einer Achse (16) verbunden ist, die im Gehäuse (1) schwenkbar gelagert ist und wenigstens einen weiteren Hebel (17, 18) trägt, der mit dem Auskuppelanschlag (13) zusammenarbeitet, dadurch gekennzeichnet, dass die Achse (16) im Gehäuse (1) über zwei Schneidengelenke (21, 22) schwenkbar gelagert ist, wobei die Schneiden (24, 29) in Richtung der Kräfte ausgerichtet sind, die jeweils an den Gelenkten wirken und einerseits aus der von der Kraftübertragung auf den ersten Hebel ausgeübten Kraft und andererseits aus der durch den Auskuppelanschlag (13) auf den weiteren Hebel (17, 18) ausgeübten Kraft resultieren.

2. Anlenkung einer Kupplungsbetätigungsgabel nach Anspruch 1, dadurch gekennzeichnet, dass jede Schneide (24, 29) an einem Ende der Achse (16) ausgebildet ist und mittels einer Kante mit einer Auflagezone eines im Gehäuse (1) angeordneten Lagers (23, 28) zusammenarbeitet, wobei die Kante der Schneide und die Auflagezone des entsprechenden Lagers mit der Schwenkachse der Gabel (15) zusammenfallen.

3. Anlenkung einer Kupplungsbetätigungsgabel nach Anspruch 2, dadurch gekennzeichnet, dass ein Stift (25) in wenigstens eines (23) der Lager eingesetzt und in einer Öffnung (26) des Gehäuses angeordnet ist.

4. Anlenkung einer Kupplungsbetätigungsgabel nach Anspruch 2, dadurch gekennzeichnet, dass zwischen wenigstens einem (28) der Lager und dem Gehäuse (1) ein Positionierring (27) angeordnet ist.

5. Anlenkung einer Kupplungsbetätigungsgabel nach Anspruch 4, dadurch gekennzeichnet, dass an einem (27b) der Enden des Positionierrings (27) eine Ausnehmung (35) vorgesehen ist, und dass das entsprechende Lager (28) einen Rand (36) aufweist, der in der Ausnehmung (35) des Positionierrings (27) angeordnet werden kann und dessen Winkelfestlegung gegenüber dem Lager gewährleistet.

6. Anlenkung einer Kupplungsbetätigungsgabel nach Anspruch 4 oder 5, dadurch gekennzeichnet, dass der Positionierring (27) festgelegt ist: einerseits in axialer Stellung mittels eines an seinem anderen Ende (27a) ausgebildeten Rands (31), der zwischen dem Gehäuse (1) und einem mit der Achse (16) verbundenen Rings (20) angeordnet ist, und andererseits gegen Drehung mittels eines am Rand (31) ausgebildeten Ansatzes (33), der in eine Nut (34) des Gehäuses (1) eingreift.

FIG.1

FIG. 2

FIG.3

FIG. 4

FIG.5

FIG 6

35
33

VII
27
VII

31

FIG 7

27b
35
31
33
27a

FIG.8

IX
28
36
IX

FIG.9

28
36

5